# EUROPÄISCHE PATENTSCHRIFT

(11) **EP 3 419 081 B1**
(45) Veröffentlichungstag und Bekanntmachung des Hinweises auf die Patenterteilung: **13.10.2021**
(21) Anmeldenummer: 17176646.2
(22) Anmeldetag: 19.06.2017
(51) Int. Cl.: H01M 50/20

(54) **BATTERIETRÄGERRAHMEN UND VERFAHREN ZU DESSEN HERSTELLUNG**
BATTERY COMPARTMENT AND METHOD FOR ITS PRODUCTION
CADRE DE SUPPORT DE BATTERIE ET SON PROCÉDÉ DE FABRICATION

(43) Veröffentlichungstag der Anmeldung: 26.12.2018
(73) Patentinhaber: DUS Operating, Inc., Auburn Hills, MI 48326 (US)
(72) Erfinder: Ruech, Carsten, 56322 Spay (DE); Schulte, Christian, 57368 Lennestadt (DE); Rau, Holger, 51580 Reichshof (DE)
(74) Vertreter: btb IP Bungartz Baltzer Partnerschaft mbB Patentanwälte

(56) Entgegenhaltungen:
- DE-A1-102013 015 299
- US-A- 3 494 609
- US-A- 4 024 691

## Beschreibung

Die Erfindung betrifft einen Tragrahmen für eine Elektrofahrzeugbatterie, der insbesondere für den Einsatz bei elektrisch betriebene Personenkraftwagen eingerichtet ist.

Der Begriff "Batterie" wird im Rahmen dieser Anmeldung als Synonym für die Gesamtheit eines in einem Tragrahmen aufgenommenen elektrischen Energiespeichers verwendet und umfasst daher selbstverständlich auch Akkumulatoren (Akkus) sowie eine Anordnung mehrerer Einzelzellen. Der Begriff "Elektrofahrzeug" umfasst insbesondere einen elektromotorisch betriebenen Personenkraftwagen und betrifft sowohl vollelektrisch betriebene Automobile als auch solche, die hybridisch betrieben werden, also über einen Antrieb verfügen, bei dem Elektromotor und Verbrennungsmotor je nach Antriebskonzept und Betriebszustand gemeinsam oder alleine für die Bereitstellung der Antriebsenergie verwendet werden.

Elektrofahrzeuge mit vollelektrischem oder zumindest teilelektrischen bzw. hybridischen Antrieb erfordern - je nach Antriebskonzept - die Unterbringung von Batterien mit bis zu mehreren hundert Kilogramm Gewicht. Bei der Unterbringung der Batterien im Fahrzeug sind einige Aspekte zu beachten.

Die Batterien sollten in einer nach außen dichten Tragstruktur angeordnet sein, so dass eine Leckage einer Batterie nicht dazu führt, dass aus der Batterie austretende Flüssigkeit oder sonstige Stoffe in die Umwelt gelangen können. Fertigungstechnisch stellt dies die Herausforderung dar, dass die Tragstruktur eine zumindest nach unten dichte Wanne bilden sollte, die ein schwerkraftbedingtes Auslaufen von Flüssigkeiten in einem Schadenfall (Batteriegehäusedefekt, Unfall, etc.) verhindert. Auch sollte die Tragstruktur von außen nach innen dicht sein, etwa um zu verhindern, dass von außen Feuchtigkeit und/oder Schmutz in das Innere des Batterieträgerrahmens eindringen können, was wiederum die Gefahr von Kurzschlüssen oder sonstigen Funktionsbeeinträchtigungen erhöhen könnte.

Aufgrund der Größe der Batterien moderner Elektrofahrzeuge übernehmen die für die Batterien verwendeten Tragstrukturen zunehmend auch strukturelle Aufgaben innerhalb der Kraftfahrzeugkarosserie. Daher sollte eine Konstruktion einer die Batterie aufnehmenden Tragstruktur nicht nur die im Fahrbetrieb auftretenden Kräfte und das Zusammenspiel der Tragstruktur mit der weiteren Karosserie, sondern insbesondere auch die in einem Crashfall auftretenden Lasten berücksichtigen.

Beide vorgenannten Anforderungen bedingen, dass die Verbindung der Strukturbauteile, mit denen die die Batterie aufnehmende Tragstruktur aufgebaut ist, hinreichend dicht und stabil sein muss. Die für die Fertigung der Tragstruktur bevorzugt verwendeten Metallprofile weisen allerdings - nicht zuletzt aufgrund von verwendeten Profillängen von teilweise deutlich mehr als einem Meter - an den bevorzugt stoffschlüssig zu fügenden Verbindungsstellen (typischer Weise im Eckbereich eines Rahmens) Maßabweichungen, insbesondere Verdrehungen auf, die zu Spalten oder einem Versatz der zu verbindenden Bauteile in einer Größenordnung führen, die kann insbesondere bei automatisierten Schweißprozessen, aber auch bei Klebungen und sonstigen stoffschlüssigen Verbindungstechniken, zu Problemen hinsichtlich Festigkeit und Dichtheit der Verbindung sowie der Prozessführung und Automation führen.

Es ist daher Aufgabe der Erfindung, einen Tragrahmen für eine Elektrofahrzeugbatterie zur Verfügung zu stellen, der hinsichtlich Dichtheit, der Kompensation von Bauteiltoleranzen und der Lastaufnahme insbesondere im Crashfall optimiert ist und sich gut automatisiert schweißen lässt. Es ist außerdem Aufgabe der Erfindung, ein Verfahren zur Herstellung eines solchen Tragrahmens bereitzustellen.

Die Aufgabe wird durch einen Batterietragrahmen nach Anspruch 1 sowie durch ein Verfahren zur Herstellung eines solchen Batterietragrahmens nach Anspruch 11 gelöst.

Danach ist ein Batterietragrahmen für ein Elektrofahrzeug vorgesehen mit einem Längsprofil und mit einem Querprofil, wobei der Tragrahmen eine einen Innenwinkel bildende Tragrahmenecke aufweist. Zwischen Längsprofil und Querprofil ist als Toleranzkompensation ein Kompensationseinsatz angeordnet, unter dessen Einbindung das Längsprofil und Querprofil miteinander verbunden sind.

Zur Herstellung eines solchen Batterietragrahmens sind die Verfahrensschritte vorgesehen:
- Positionieren des Kompensationseinsatzes im Bereich der Tragrahmenecke in einer Ausgleichslage, in der der Kompensationseinsatz unter Ausgleich einer zwischen den Profilen bestehenden Sollmaßabweichung an eine Seitenfläche des Längsprofils oder an eine Seitenfläche des Querprofils angesetzt und stirnseitig in bzw. auf das jeweils andere Profil eingeschoben bzw. aufgeschoben ist,
- Verbinden des Längsprofils und des Querprofils mit dem Kompensationseinsatz.

Das Verbinden mit des Längsprofils und des Querprofils mit dem Kompensationseinsatz findet bevorzugt über eine stoffschlüssige Verbindung, insbesondere eine Schweißverbindung oder eine Klebung statt. Der Kompensationseinsatz dient als toleranzkompensierender Überbrückungseinschub und ist bevorzugt ein (Druck- )Gussteil, ein Tiefziehteil oder aber ein Schmiedeteil und ist weiter bevorzugt aus einer Leichtmetalllegierung, insbesondere einer Aluminiumlegierung und bevorzugt als Vollmaterialbauteil hergestellt. Längsprofil und Querprofil sind bevorzugt Strangpressprofile aus Leichtmetalllegierungen, insbesondere Aluminiumlegierungen. Bevorzugt sind Längsprofil und/oder Querprofil Mehrkammerhohlprofile mit einem oder mehreren Innenstegen. Selbstverständlich ist es auch möglich, dass Längsprofil und/oder Querprofil und/oder Eckprofil aus einem gegebenenfalls faserverstärkten Kunststoffmaterial gefertigt sind. Insbesondere in einem solchen Fall kann auch vorgesehen sein, dass das Fügen der verschiedenen Bauteile durch Kleben erfolgt.

Durch die Verwendung eines im Bereich der Tragrahmenecke zusätzlich eingesetzten Kompensationseinsatzes, der ein von dem Längsprofil und dem Querprofil ursprünglich separates Bauteil ist und mittels dem die Notwendigkeit, Querprofil und Längsprofil direkt miteinander zu verbinden, vermieden ist, können etwaige Maßabweichungen der Trägerprofile vom idealen Sollmaß, insbesondere Verdrehungen bzw. Profiltorsionen und sonstige Schiefstellungen der den Schweißstoß beeinflussenden Bauteilbereiche, kompensiert und über den Kompensationseinsatz ausgeglichen werden. Auch sonstige Sollmaßabweichungen wie etwa Abweichungen von der Geradheit können ausgeglichen werden.

Ein weiterer Vorteil ist, dass die zur Verbindung von Längs- und Querprofil vorzunehmenden und bevorzugt umlaufenden Schweißnähte oder die Klebungen entweder aus dem unmittelbaren Eckbereich heraus an eine besser erreichbare Stelle verlagert sind oder aber - dies gilt hinsichtlich der Schweißnaht oder Klebung, über die der Kompensationseinsatz mit einer Seitenfläche des einen Profils verbunden wird - ohne das physische Vorhandensein des anderen Profils realisiert werden können. Daher können die Verbindung zwischen den Bauteilen, insbesondere die Schweißungen oder Klebungen, prozesssicherer mit besserem Ergebnis hinsichtlich Belastbarkeit und Dichtheit durchgeführt werden.

Durch die Verwendung eines Kompensationseinsatzes und dessen Einbindung in die stoffschlüssige Verbindung zwischen Querprofil und Längsprofil entstehen bei geringerem fertigungstechnischen Schweißaufwand höher belastbare Schweißnähte, die außerdem mit einer größeren Sicherheit den an den Batterietragrahmen gestellten Dichtheitsanforderungen genügen. Sowohl die Verbindung des Längsprofils mit dem Kompensationseinsatz als auch die Verbindung des Querprofils mit dem Kompensationseinsatz kann von einer umlaufenden in einer Schweißebene befindlichen Schweißnaht gebildet sein.

Um die vorstehend beschriebenen Vorteile besonders gut umsetzen zu können, ist vorgesehen, dass der Kompensationseinsatz mit dem stirnseitigen Randbereich des Längsprofils oder des Querprofils innenseitig oder außenseitig in Überlappung steht und mit dem jeweiligen anderen Profil über eine außenseitige Seitenfläche desselben verbunden ist. So sind Längsprofil und Querprofil nicht unmittelbar miteinander verbunden, sondern die Verbindung der beiden Profile wird über den Kompensationseinsatz gewährleistet.

Als vorteilhaft wird angesehen, wenn der Kompensationseinsatz in das Längsprofil oder in das Querprofil stirnseitig eindringt und ein Außenmaß des Kompensationseinsatzes in Bezug auf das Profil, in das der Kompensationseinsatz eindringt, untermaßig ist oder wenn der Kompensationseinsatz das Längsprofil oder das Querprofil stirnseitig außen übergreift und ein Innenmaß des Kompensationseinsatzes in Bezug auf das Profil, das der Kompensationseinsatz außenseitig übergreift, übermaßig ist. Dies ermöglicht es, das Längs- oder das Querprofil trotz des Eingriffs des Kompensationsprofils in das jeweilige Profil gegenüber dem Kompensationseinsatz zumindest in einem für die Toleranzkompensation erforderlichen Maß zu verdrehen. "Untermaßig" und "Übermaßig" bedeutet in diesem Fall das gezielte Einrichten einer großzügigen Übermaßpassung bzw. eines Spiels, so dass eine etwaige Abweichung vom Sollmaß kompensiert werden kann.

Auf diese Weise kann zum Beispiel eine äußere Seitenfläche des Längsträgers zur Verbindung mit dem Kompensationseinsatz gegen den Kompensationseinsatz auf Stoß angesetzt und anschließend mit dem Kompensationseinsatz verbunden werden und/oder eine äußere Seitenfläche des Querträgers kann zur Verbindung mit dem Kompensationseinsatz gegen den Kompensationseinsatz auf Stoß angesetzt und anschließend hiermit verbunden werden. Das Ansetzen des Kompensationseinsatzes an eine Seitenfläche des Längsprofils oder des Querprofils erfolgt bevorzugt bereits unter Berücksichtigung einer etwaigen Sollmaßabweichung in einer Ausgleichsposition.

Es kann vorgesehen sein, dass der Kompensationseinsatz in das Längsprofil oder in das Querprofil stirnseitig eindringt und das Längsprofil oder das Querprofil, in das der Kompensationseinsatz eindringt, von einer die Profilaußenfläche bildenden Wandung innseitig ausgehende Innenstege aufweist, die in dem Bereich, in dem der Kompensationseinsatz in das Profil eindringt, entfernt sind. Hierdurch ist gewährleistet, dass das Kompensationseinsatz innenseitig des Profils, in das dieser eindringt, bei dessen Deformation oder bei Versagen der Verbindung formschlüssig mit den Innenstegen in Anlage kommen kann. So ist neben den den Kompensationseinsatz und das Längs- bzw. Querprofil verbindenden Schweißnähten außerdem ein in Längsrichtung des Profils, in das der Kompensationseinsatz eindringt, formschlüssig wirkender Lastpfad gewährleistet, der insbesondere dann wirksam wird, wenn in einem Crashfall die Schweißnaht versagt oder das Profil stauchungsbedingt stark deformiert wird.

Bevorzugt ist der Kompensationseinsatz wannenförmig ausgebildet und kann insbesondere eine bevorzugt durch einen Randsteg gebildete umlaufend geschlossene Seitenwandung aufweisen, die zu einem Teil stirnseitig in das Querprofil oder das Längsprofil eindringt. Bei der Herstellung des Batterietragrahmens kann dann das Längsprofil und das Querprofil über den Kompensationseinsatz zur Bildung der Tragrahmenecke miteinander verbunden werden. Dabei wird bevorzugt das Längsprofil und/oder das Querprofil über eine umlaufende Schweißnaht mit dem Kompensationseinsatz verbunden, nachdem der Kompensationseinsatz in einer die Sollmaßabweichung berücksichtigenden Ausgleichslage gegen eine Seitenfläche des Längsprofils angesetzt worden ist. Anschließend wird das jeweils andere Profil mit dem Kompensationseinsatz über eine umlaufende Schweißnaht verbunden. Es kann bei ausreichender Nähe von Querprofil und Längsprofil aber auch eine einzige Schweißnaht vorgesehen sein, die Längsprofil und Querprofil unter Einbindung des Materials des Kompensationseinsatzes miteinander stoffschlüssig verbindet.

Durch die Verwendung des Kompensationseinsatzes zwischen Längsprofil und Querprofil kann bei gleichzeitiger Steigerung von Belastbarkeit und Dichtheit der Tragrahmenecke eine Schiefstellung der Profile zueinander kompensiert werden. Durch den Kompensationseinsatz wird insbesondere auch eine Übertragung einer im Bereich der Tragrahmenecke vorzufindenden Sollmaßabweichung an einem der beiden zu verbindenden Profile auf das andere Profil vermieden. Der Abstand, den die Stirnseite des einen Profils, in das der Kompensationseinsatz mit einer bestimmten Eindringtiefe eindringt, zu der Seitenfläche des anderen Profils, mit der der Kompensationseinsatz verbunden ist, einnimmt, ist zudem infolge dessen, dass das System verschiedene Eindringtiefen zulässt, variabel.

Um nicht nur eine Dichtheit der Tragrahmenecke an den Verbindungsstellen zwischen Kompensationseinsatz und Längs- bzw. Querprofil herzustellen, sondern auch eine Dichtheit des Tragrahmens gegenüber einem Bodenblech, kann vorgesehen sein, dass zumindest der vom Kompensationseinsatz, dem Längsprofil und dem Querprofil gebildete Bereich der Tragrahmenecke unterseitig nach dem Verbinden von Längsprofil und Querprofil mit dem Kompensationseinsatz spanend nachbearbeitet ist. Hierdurch lässt sich insbesondere ein ebenes Bodenblech passgenau mit dem Tragrahmen verbinden. Etwaige verbliebene Schiefstellungen oder Schweißnahtüberstände, die sich bei der Herstellung der Verbindung von Bodenblech und Tragrahmen insbesondere im Bereich der Tragrahmenecke nachteilig auf die Dichtheit und Belastbarkeit auswirken können, werden so sicher beseitigt.

Der vorstehend beschriebene Batterietragrahmen sowie das Verfahren zu dessen Herstellung ermöglichen eine Ausgestaltung eines Batterietragrahmens, bei dem das Längsprofil und das Querprofil ein Hohlkammerprofil ist, wobei von einem der beiden Profile die nach außen weisende Profilseite und vom anderen der beiden Profile die nach innen weisende Profilseite die dichtende Profilseite sein kann, während in der jeweils anderen Profilseite Öffnungen oder Bohrungen vorgesehen sein können.

Weitere Merkmale und Vorteile der Erfindung ergeben sich der nachfolgenden Beschreibung bevorzugter Ausführungsbeispiele anhand der Zeichnungen.

In den Zeichnungen zeigen:
- Fig. 1a/1b: den Eckbereich eines konventionellen Tragrahmens für eine Elektrofahrzeugbatterie in zwei verschiedenen perspektivischen Ansichten,
- Fig. 2a/2b: den Eckbereich eines Tragrahmens für eine Elektrofahrzeugbatterie mit einem im Bereich der Tragrahmenecke eingesetzten Kompensationseinsatz in zwei verschiedenen perspektivischen Ansichten,
- Fig. 3: eine Gegenüberstellung verschiedener durch den Kompensationseinsatz realisierbarer Toleranzkompensationen,
- Fig. 4: eine Detailansicht des Kompensationseinsatzes,
- Fig. 5: eine Ansicht auf einen Längs- oder Querprofilquerschnitt mit teilentfernten Innenstegen.

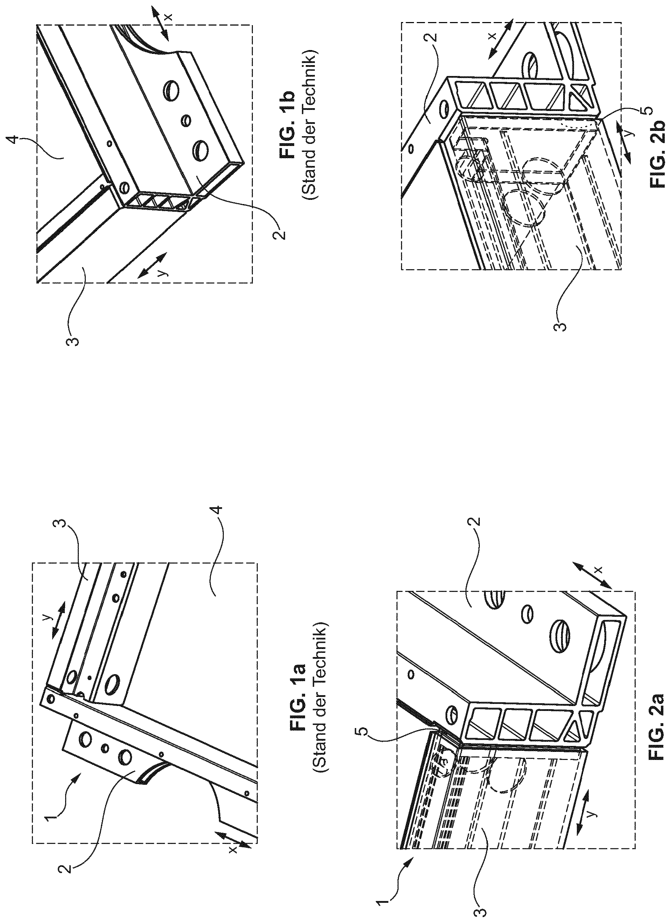

In Figur 1a und Figur 1b ist ein Eckbereich eines konventionellen Batterietragrahmens 1 gezeigt. Ein mit seiner Längserstreckung in x-Richtung (parallel zur Vorwärtsfahrtrichtung bei Geradeausfahrt) ausgerichtetes Längsprofil 2 ist mit einem Querprofil 3 verbunden, dass sich in y-Richtung (Quer zur x-Richtung und parallel zur Fahrbahnfläche) erstreckt. Der in den Figuren nicht vollständig dargestellte Batterietragrahmen 1 weist mindestens zwei oder insgesamt bis zu vier derartig ausgestaltete Ecken auf und ist bevorzugt rechtwinklig ausgebildet. Unterseitig an Längsprofil 2 und Querprofil 3 ist ein Bodenblech 4 an dem Rahmen befestigt.

Längsprofil 2 und Querprofil 3 sind verschweißt. Die aus den Figuren nicht explizit ersichtliche Schweißnaht verläuft über einen großen Teil ihres Umfangs entlang einer inneren Seitenfläche des Längsprofils 2 und ist bedingt dadurch, dass eine Stirnseite des Querprofils 3 auf Stoß gegen die als Verbindungsfläche dienende Seitenfläche des Längsprofils angesetzt ist, in diesem Bereich als Kehlnaht ausgeführt. Die Schweißnaht verläuft entlang der unmittelbar am Stoß zwischen Querprofil und Längsprofil entstehenden Innenecke.

Bei dieser Konstruktion führt eine nicht hinreichende Maßhaltigkeit des Längsprofils 2 und/oder des Querprofils 3 dazu, dass sich im Bereich der auch die Innenecke des Rahmens bildenden Verbindungsstelle ungleichmäßige Spalte ausbilden, die nicht ohne weiteres korrigierbar sind, sondern letztlich durch die Schweißnaht überbrückt werden müssen. Insbesondere kann das Längsprofil durch eine Längsprofiltorsion in sich verdreht sein. Derartige Spalte führen wiederum zu einer deutlich gesteigerten Gefahr von unzureichend festen und dichten Schweißnähten und erschweren die prozesssichere automatisierte Schweißung.

Um für die vorstehend beschriebenen Probleme Abhilfe zu schaffen, sieht der Batterietragrahmen 1 nach Figur 2a und 2b zwischen Längsprofil 2 und Querprofil 3 ein die Tragrahmenecke überbrückenden Kompensationseinsatz 5 vor. Die nach Figur 1a und Figur 1b noch mittels einer einzigen umlaufenden Schweißnaht verbundenen Profile 2, 3 können nun mittels zwei voneinander getrennten oder sich überlappenden Schweißnähten oder über eine breitere Schweißnaht, die auch das Kompensationsprofil 5 erfasst und nicht lediglich die beiden Profile 2, 3 unmittelbar miteinander verbindet, verbunden werden. Die Gewähr dafür, dass die Schweißungen hinreichend belastbar und dicht sind, ist durch die Einbindung des Kompensationseinsatzes in die Schweißverbindung sowie durch den hiermit gewährleisteten Ausgleich etwaiger Sollmaßabweichungen erheblich erhöht.

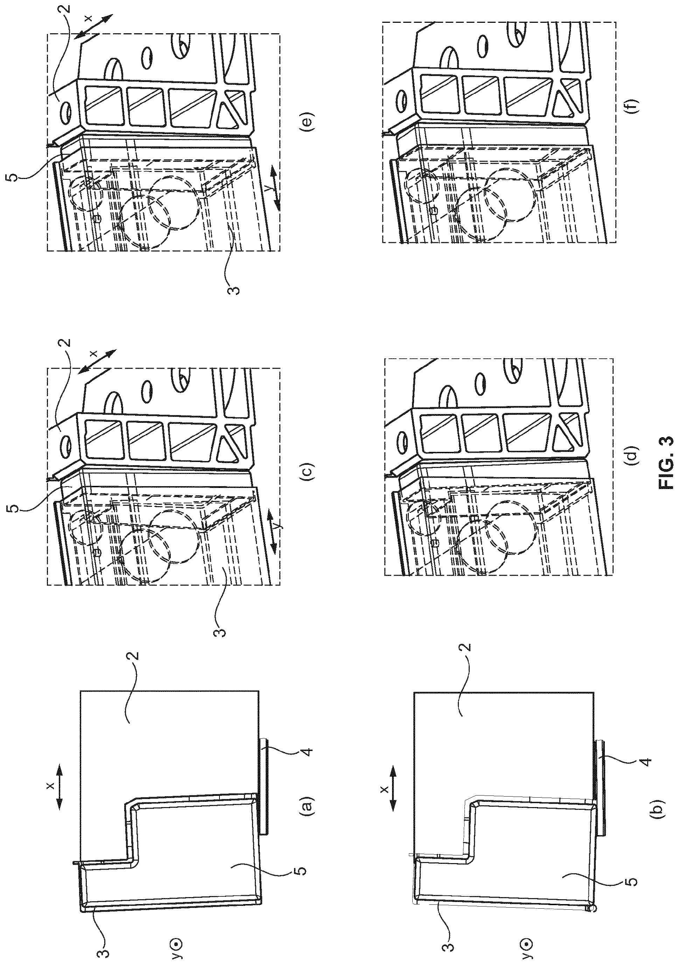

Auch bei dem in Figur 2a und Figur 2b gezeigten Batterietragrahmen 1 ist ein Bodenblech 4 mit dem Tragrahmen verbunden, das in Abbildungen (a) und (b) von Figur 3 unterseitig der Tragrahmenecke angedeutet ist.

In den Abbildungen (a) bis (f) von Figur 3 sind verschiedene Möglichkeiten des Ausgleichs von Sollmaßabweichungen, die der Einsatz eines Kompensationseinsatzes ermöglicht, dargestellt.

Abbildung (a) und (b) veranschaulichen in einem in y-Richtung auf die Seitenflächen des Längsprofils 2 gerichteten Blick unterschiedliche Ausrichtungen des Kompensationseinsatzes 5. Erkennbar ist der Kompensationseinsatz in Abbildung (a) infolge einer Profiltorsion des Querprofils 3 gegenüber der x-Richtung leicht gegen den Uhrzeigersinn verkippt, während in der Abbildung (b) der Kompensationseinsatz infolge einer Profiltorsion des Querprofils 3 gegenüber der x-Richtung leicht im Uhrzeigersinn verkippt ist. Abbildungen (a) und (b) von Figur 3 verdeutlichen somit insbesondere den Ausgleich einer Querträgerprofiltorsion gegenüber dem Längsprofil.

Abbildungen (c) und (d) von Figur 3 ist der Ausgleich einer Längsprofiltorsion gegenüber dem Querprofil (3) zu entnehmen. Ersichtlich taucht in Abbildung (c) der untere Rand des Kompensationseinsatzes 5 stirnseitig tiefer in das Querprofil 3 ein als der obere Rand. Das Längsprofil 2 ist unter Abweichung vom Sollmaß derart in sich verdreht, dass der stirnseitige Endquerschnitt leicht im Uhrzeigersinn gegenüber dem Querprofil 3 verkippt ist. In Abbildung (d) ist es genau umgekehrt. Hier taucht der obere Rand des Kompensationseinsatzes 5 tiefer in das Querprofil 3 ein. Das Längsprofil 2 ist infolge einer vorliegenden Profiltorsion derart in sich verdreht, dass der stirnseitige Endquerschnitt des Längsprofils 2 gegenüber dem Querprofil 3 leicht gegen den Uhrzeigersinn verkippt ist. In beiden Fällen nimmt das Kompensationsprofil die Profiltorsion das Längsprofils 2 auf und gleicht diese gegenüber dem Querprofil 2 aus.

Abbildungen (e) und (f) verdeutlichen, dass dadurch, dass der Kompensationseinsatz 5 unterschiedlich tief in das Querprofil 3 eindringen kann, auch eine Längenabweichung des Querprofils 3 von der Solllänge und/oder eine Gradheitsabweichung im Längsprofil 3 über den Kompensationseinsatz ausgeglichen werden können.

Figur 3 verdeutlicht, dass der Kompensationseinsatz 5 gegenüber dem Innenmaß des Profils, in das er eingeführt wird, derart untermaßig ausgebildet ist, dass der Kompensationseinsatz 5 die verschiedenen Abweichungen von den theoretischen Sollmaßen der Profile ausgleichen kann. Selbstverständlich ist der Kompensationseinsatz auch in der Lage, andere als die explizit in den Figur 3 dargestellten Sollmaßabweichungen auszugleichen.

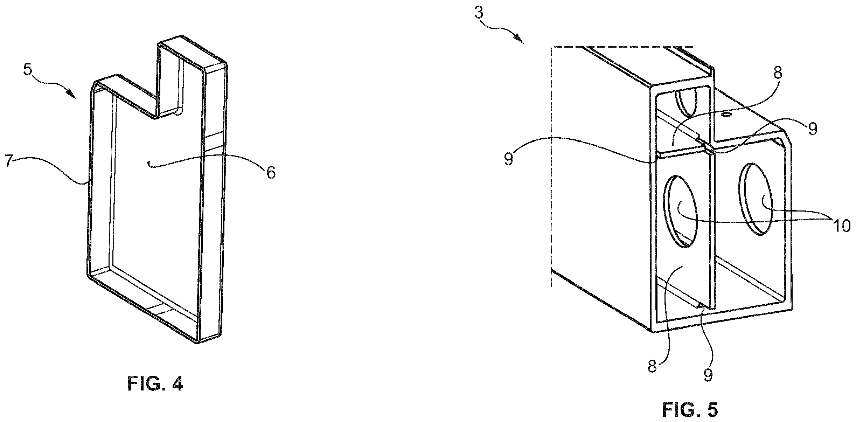

Figur 4 zeigt den Kompensationseinsatz 5 in einer perspektivischen Ansicht. Der Kompensationseinsatz 5 weist eine wannenartige Struktur mit einer unterseitigen Anlagefläche 6 auf, die bei dem in den Figuren gezeigten Ausführungsbeispiel gegen die Seitenfläche des Längsprofils angesetzt wird. Der Kompensationseinsatz 5 weist einen umlaufenden Randsteg 7 auf, der derart bemessen ist, dass der Kompensationseinsatz 5 mit vorauseilendem Randsteg 7 stirnseitig in ein offenes Ende des Querprofils eingeführt werden kann. Die nach außen gerichtete Fläche des Randsteges 7 bildet die Verbindungsfläche, über die durch stoffschlüssige Verbindung mit dem Längsprofil und dem Querprofil in die Verbindung von Querprofil und Längsprofil mit eingebunden ist.

Die Anlagefläche 6 kann, wie in den Figuren dargestellt, durchgängig geschlossen sein. Es ist aber auch möglich, dass die Anlagefläche 6 keine geschlossene Fläche ausbildet. Zum Beispiel kann der jeweilige Randbereich des Kompensationseinsatzes von einem umlaufenden im Winkelprofil mit einem den Randsteg 7 bildenden und bei bestimmungsgemäßer Verwendung in das Querprofil eintauchenden Schenkel und einem bevorzugt nach innen gerichteten, mit seiner Unterseite die Anlagefläche definierenden Schenkel gebildet sein.

Figur 5 zeigt ein Querprofil 3, in das der in Figur 4 gezeigte Kompensationseinsatz 5 eintauchen kann. Um dies zu ermöglichen, sind in Innenstegen 8, die das als Mehrkammerhohlprofil ausgebildete Querprofil 3 aufweist, Ausklinkungen 9 vorgesehen, die ein Eintauchen des Kompensationseinsatzes 5 in Längsrichtung des Querprofils ermöglichen. Gleichzeitig gewährleisten die Innenstege 8, dass der Kompensationseinsatz 5 im Falle eines Unfalls, insbesondere im Falle eines Seitencrashs und einer damit einhergehenden stauchungsbedingten Deformation und/oder einem möglichen Versagen einer Längsprofil und Querprofil verbindenden Schweißnaht, mit den Innenstegen des Querprofils formschlüssig in Anlage kommt und etwaige Kräfte unter Einbindung des Kompensationseinsatzes in den Lastpfad auch über die Innenstege abgestützt werden. Auch in x-Richtung vermag der so in das Querprofil 3 eingreifende Kompensationseinsatz einen formschlüssig wirksamen Eingriff mit dem Querprofil zu bilden.

Um bei der Herstellung des Batterietragrahmens zu vermeiden, dass sich zum Beispiel eine Längsprofiltorsion über den Kompensationseinsatz auf das Querprofil überträgt, wenn erst Längsprofil und Kompensationseinsatz miteinander verbunden werden und dann das Querprofil mit dem Kompensationseinsatz verbunden wird, werden Querprofil und Längsprofil in einer Sollstellung zueinander positioniert und ausgerichtet und der Kompensationseinsatz wird in eine Ausgleichsstellung gedrängt, in der er unter Ausgleich etwaiger Sollmaßabweichungen von Längsprofil und Querprofil mit der unteren Anlagefläche gegen die Seitenfläche des Längsprofils angestellt ist (vergleiche Figur 3). Auf den Kompensationseinsatz kann zur Überführung in die Ausgleichsstellung eine Anstellkraft ausgeübt werden. Hierzu könnte zum Beispiel über Eingriffsöffnungen 10 in das Querprofil eingegriffen werden und der Kompensationseinsatz mittels eines Stellnockens in die Ausgleichsstellung überführt werden. Es wäre auch denkbar, etwa durch Lufteinblasung den Innendruck im Querprofil zu erhöhen, so dass der Kompensationseinsatz infolge des Innendrucks in die Ausgleichsstellung gedrängte wird.

Soweit vorstehend die Herstellung des Batterietragrahmens insbesondere in Bezug auf eine Längsprofiltorsion sowie dahingehend beschrieben worden ist, dass der Kompensationseinsatz gegen eine Seitenfläche des Längsprofils angesetzt wird und stirnseitig in das das Querprofil eintaucht oder dieses übergreift, sei angemerkt, dass diese Anordnung selbstverständlich abhängig vom jeweiligen Anwendungsfall auch umgekehrt werden kann. Insbesondere sei angemerkt, dass eine Profiltorsion selbstverständlich genauso im Querprofil vorliegen kann.

### Bezuaszeichenliste

- 1: Batterietragrahmen
- 2: Längsprofil
- 3: Querprofil
- 4: Bodenblech
- 5: Kompensationseinsatz
- 6: Anlagefläche
- 7: Randsteg
- 8: Innenstege
- 9: Ausklinkungen
- 10: Eingriffsöffnungen

## Patentansprüche

1. Batterietragrahmen (1) für ein Elektrofahrzeug mit einem Längsprofil (2) und mit einem Querprofil (3), wobei der Tragrahmen (1) wenigstens eine einen Innenwinkel bildende Tragrahmenecke aufweist, **dadurch gekennzeichnet, dass** zwischen Längsprofil (2) und Querprofil (3) als Toleranzkompensation ein Kompensationseinsatz (5) angeordnet ist, unter dessen Einbindung das Längsprofil (2) und Querprofil (3) miteinander verbunden sind.

2. Batterietragrahmen nach Anspruch 1, **dadurch gekennzeichnet, dass** der Kompensationseinsatz (5) mit dem stirnseitigen Randbereich des Längsprofil (2) oder des Querprofil (3) innenseitig oder außenseitig in Überlappung steht und mit dem jeweiligen anderen Profil über eine Seitenfläche (2', 3') desselben verbunden ist.

3. Batterietragrahmen nach einem der vorhergehenden Ansprüche, **dadurch gekennzeichnet, dass** der Kompensationseinsatz (5) in das Längsprofil (2) oder in das Querprofil (3) stirnseitig eindringt und ein Außenmaß des Kompensationseinsatzes (5) in Bezug auf das Profil, in das der Kompensationseinsatz (5) eindringt, untermaßig ist
**oder dass**
der Kompensationseinsatz (5) das Längsprofil (2) oder das Querprofil (3) stirnseitig außen übergreift und ein Innenmaß des Kompensationseinsatzes (5) in Bezug auf das Profil, das der Kompensationseinsatz (5) außenseitig übergreift, übermaßig ist.

4. Batterietragrahmen nach einem der vorhergehenden Ansprüche, **dadurch gekennzeichnet, dass** der Kompensationseinsatz (5) in das Längsprofil (2) oder in das Querprofil (3) stirnseitig eindringt und das Längsprofil (2) oder das Querprofil (3), in das der Kompensationseinsatz (5) eindringt, von einer die Profilaußenfläche bildenden Wandung innseitig ausgehende Innenstege aufweist, die in dem Bereich, in dem der Kompensationseinsatz in das Profil eindringt, entfernt sind.

5. Batterietragrahmen nach einem der vorhergehenden Ansprüche, **dadurch gekennzeichnet, dass** der Kompensationseinsatz (5) wannenförmig ausgebildet ist.

6. Batterietragrahmen nach dem vorhergehenden Anspruch, **dadurch gekennzeichnet, dass** der Kompensationseinsatz (5) eine umlaufend geschlossene Seitenwandung aufweist, die zu einem Teil in das Querprofil (3) oder das Längsprofil (2) eindringt oder dieses überlappend übergreift.

7. Batterietragrahmen nach einem der vorhergehenden Ansprüche, **dadurch gekennzeichnet, dass** das Längsprofil (2) und das Querprofil (3) unter Einbindung des Kompensationseinsatzes (5) stoffschlüssig miteinander verbunden sind.

8. Batterietragrahmen nach einem der vorhergehenden Ansprüche, **dadurch gekennzeichnet, dass** das Längsprofil (2) über eine umlaufende Schweißnaht mit dem Kompensationseinsatz (5) verbunden ist und das Querprofil (3) mit dem Kompensationseinsatz (5) über eine umlaufende Schweißnaht verbunden ist.

9. Batterietragrahmen nach einem der vorhergehenden Ansprüche, **dadurch gekennzeichnet, dass** der vom Kompensationseinsatz (5), dem Längsprofil (2) und dem Querprofil (3) gebildete Bereich der wenigstens einen Tragrahmenecke unterseitig nach dem Verbinden von Längsprofil (2) und Querprofil (3) mit dem Kompensationseinsatz (5) spanend nachbearbeitet ist.

10. Batterietragrahmen nach einem der vorhergehenden Ansprüche, **dadurch gekennzeichnet, dass** das Längsprofil (2) und das Querprofil (3) ein Hohlkammerprofil ist, wobei von einem der beiden Profile die nach außen weisende Profilseite und vom anderen der beiden Profile die nach innen weisende Profilseite die den Tragrahmen (1) nach außen dichtende Profilseite ist.

11. Verfahren zur Herstellung eines Batterietragrahmens (1) nach einem der vorhergehenden Ansprüche, **gekennzeichnet durch** die Verfahrensschritte
- Positionieren des Kompensationseinsatzes (5) im Bereich der Tragrahmenecke in einer Ausgleichslage, in der der Kompensationseinsatz unter Ausgleich einer zwischen den Profilen bestehenden Sollmaßabweichung an eine Seitenfläche des Längsprofils (2) oder an eine Seitenfläche des Querprofils (3) angesetzt und stirnseitig in bzw. auf das jeweils andere Profil eingeschoben bzw. aufgeschoben ist,
- Verbinden des Längsprofils (2) und des Querprofils (3) mit dem Kompensationseinsatz (5) unter Einbindung des Kompensationseinsatzes (5).

12. Verfahren zur Herstellung eines Batterietragrahmens (1) nach dem vorhergehenden Anspruch, **gekennzeichnet durch** den weiteren Verfahrensschritt der spanenden Nachbearbeitung des vom Kompensationseinsatz (5), dem Längsprofil (2) und dem Querprofil (3) gebildeten unterseitigen Bereichs der wenigstens einen Tragrahmenecke nach dem Verbinden von Längsprofil (2) und Querprofil (3).

13. Verfahren zur Herstellung eines Batterietragrahmens (1) nach einem der beiden vorhergehenden Ansprüche, **dadurch gekennzeichnet, dass** der Kompensationseinsatz (5) durch eine auf diesen aufgebrachte Stellkraft in die eine bestehende Sollmaßabweichung ausgleichende Ausgleichslage überführt wird.

14. Verfahren zur Herstellung eines Batterietragrahmens (1) nach dem vorhergehenden Anspruch, **dadurch gekennzeichnet, dass** vor einem Einschieben des Kompensationsprofils (5) in das Querprofil (3) oder Längsprofil (2) Innenstege (8) innerhalb dieses Querprofils (3) oder Längsprofils (2) beschnitten worden sind.

## Claims

1. Battery support frame (1) for an electric vehicle, having a longitudinal profile (2) and having a transverse profile (3), wherein the support frame (1) comprises at least one support frame corner defining an internal angle, **characterized in that** a compensation insert (5) is arranged between the longitudinal profile (2) and the transverse profile (3) as tolerance compensation, the longitudinal profile (2) and the transverse profile (3) being connected to one another with the integration of the compensation insert (5).

2. Battery support frame according to claim 1, **characterized in that** the compensation insert (5) overlaps the end face edge region of the longitudinal profile (2) or the transverse profile (3) on the inside or outside and is connected to the respective other profile via a side face (2', 3') thereof.

3. Battery support frame according to one of the preceding claims, **characterized in that** the compensation insert (5) penetrates the longitudinal profile (2) or the transverse profile (3) at the end face, and an outer dimension of the compensation insert (5) is undersized with respect to the profile into which the compensation insert (5) penetrates.
**or that**
the compensation insert (5) overlaps the longitudinal profile (2) or the transverse profile (3) on the outside on the end face, and an internal dimension of the compensation insert (5) is oversized with respect to the profile which the compensation insert (5) overlaps on the outside.

4. Battery support frame according to one of the preceding claims, **characterized in that** the compensation insert (5) penetrates into the longitudinal profile (2) or into the transverse profile (3) at the end face, and the longitudinal profile (2) or the transverse profile (3) into which the compensation insert (5) penetrates has inner webs which extend from a wall forming the outer surface of the profile on the inside and are removed in the region in which the compensation insert penetrates into the profile.

5. Battery support frame according to one of the preceding claims, **characterized in that** the compensation insert (5) is tub-shaped.

6. Battery support frame according to the preceding claim, **characterized in that** the compensation insert (5) has a circumferentially closed side wall which partly penetrates into or overlaps the transverse profile (3) or the longitudinal profile (2).

7. Battery support frame according to one of the preceding claims, **characterized in that** the longitudinal profile (2) and the transverse profile (3) are connected to one another by a material bond, incorporating the compensation insert (5)..

8. Battery support frame according to one of the preceding claims, **characterized in that** the longitudinal profile (2) is connected to the compensation insert (5) via a circumferential weld seam and the transverse profile (3) is connected to the compensation insert (5) via a circumferential weld seam.

9. Battery support frame according to one of the preceding claims, **characterized in that** the region of the at least one support frame corner formed by the compensation insert (5), the longitudinal profile (2) and the transverse profile (3) is machined on the underside after the longitudinal profile (2) and the transverse profile (3) have been connected to the compensation insert (5)..

10. Battery support frame according to one of the preceding claims, **characterized in that** the longitudinal profile (2) and the transverse profile (3) is a hollow chamber profile, wherein of one of the two profiles the outwardly facing profile side and of the other of the two profiles the inwardly facing profile side is the profile side sealing the support frame (1) to the outside.

11. Method of manufacturing a battery support frame (1) according to any one of the preceding claims, **characterized by** the method steps of
- Positioning of the compensation insert (5) in the area of the supporting frame corner in a compensation position, in which the compensation insert is attached to a side face of the longitudinal profile (2) or to a side face of the transverse profile (3) and is pushed into or onto the respective other profile at the end face while compensating for a nominal dimension deviation existing between the profiles,
- Connecting the longitudinal profile (2) and the transverse profile (3) to the compensation insert (5) while integrating the compensation insert (5).

12. Method of manufacturing a battery support frame (1) according to the preceding claim, **characterized by** the further method step of machining the underside region of the at least one support frame corner formed by the compensation insert (5), the longitudinal profile (2) and the transverse profile (3) after the longitudinal profile (2) and the transverse profile (3) have been joined.

13. Method for producing a battery support frame (1) according to one of the two preceding claims, **characterized in that** the compensation insert (5) is transferred into the compensation position compensating for an existing nominal dimension deviation by an actuating force applied to it.

14. Method of manufacturing a battery support frame (1) according to the preceding claim, **characterized in that,** prior to insertion of the compensation profile (5) into the transverse profile (3) or longitudinal profile (2), internal webs (8) have been trimmed within said transverse profile (3) or longitudinal profile (2).

## Revendications

1. Cadre de support de batterie (1) pour un véhicule électrique, comprenant un profil longitudinal (2) et un profil transversal (3), le cadre de support (1) comprenant au moins un coin de cadre de support formant un angle intérieur, **caractérisé en ce qu'un** insert de compensation (5) est disposé entre le profil longitudinal (2) et le profil transversal (3) en tant que compensation de tolérance, le profil longitudinal (2) et le profil transversal (3) étant reliés l'un à l'autre avec l'intégration de l'insert de compensation (5).

2. Cadre de support de batterie selon la revendication 1, **caractérisé en ce que** l'insert de compensation (5) recouvre la zone de bord de la face frontale du profil longitudinal (2) ou du profil transversal (3) sur la face intérieure ou extérieure et est relié à l'autre profil respectif par l'intermédiaire d'une face latérale (2', 3') de celui-ci.

3. Cadre de support de batterie selon l'une des revendications précédentes, **caractérisé en ce que** l'insert de compensation (5) pénètre le profil longitudinal (2) ou le profil transversal (3) au niveau de la face frontale et une dimension extérieure de l'insert de compensation (5) est sous-dimensionnée par rapport au profil dans lequel l'insert de compensation (5) pénètre.
ou que
l'insert de compensation (5) recouvre le profil longitudinal (2) ou le profil transversal (3) à l'extérieur sur la face frontale et une dimension intérieure de l'insert de compensation (5) est surdimensionnée par rapport au profil que l'insert de compensation (5) recouvre à l'extérieur.

4. Cadre de support de batterie selon l'une des revendications précédentes, **caractérisé en ce que** l'insert de compensation (5) pénètre dans le profilé longitudinal (2) ou dans le profilé transversal (3) sur la face frontale, et le profilé longitudinal (2) ou le profilé transversal (3), dans lequel pénètre l'insert de compensation (5), présente des nervures intérieures qui s'étendent vers l'intérieur à partir d'une paroi formant la surface extérieure du profilé et qui sont enlevées dans la zone dans laquelle l'insert de compensation pénètre dans le profilé.

5. Cadre de support de batterie selon l'une des revendications précédentes, **caractérisé en ce que** l'insert de compensation (5) est en forme d'auge.

6. Cadre de support de batterie selon la revendication précédente, **caractérisé en ce que** l'insert de compensation (5) présente une paroi latérale fermée en périphérie qui pénètre partiellement dans le profil transversal (3) ou le profil longitudinal (2) ou le recouvre.

7. Cadre de support de batterie selon l'une des revendications précédentes, **caractérisé en ce que** le profil longitudinal (2) et le profil transversal (3) sont reliés l'un à l'autre par liaison de matière en incluant l'insert de compensation (5).

8. Cadre de support de batterie selon l'une des revendications précédentes, **caractérisé en ce que** le profil longitudinal (2) est relié à l'insert de compensation (5) par un cordon de soudure circonférentiel et le profil transversal (3) est relié à l'insert de compensation (5) par un cordon de soudure circonférentiel.

9. Cadre de support de batterie selon l'une des revendications précédentes, **caractérisé en ce que** la zone de l'au moins un coin de cadre de support formée par l'insert de compensation (5), le profil longitudinal (2) et le profil transversal (3) est usinée sur la face inférieure après que le profil longitudinal (2) et le profil transversal (3) ont été reliés à l'insert de compensation (5).

10. Cadre de support de batterie selon l'une des revendications précédentes, **caractérisé en ce que** le profil longitudinal (2) et le profil transversal (3) est un profil à chambre creuse, le côté du profil tourné vers l'extérieur de l'un des deux profils et le côté du profil tourné vers l'intérieur de l'autre des deux profils étant le côté du profil assurant l'étanchéité du cadre de support (1) vers l'extérieur.

11. Procédé de fabrication d'un cadre de support de batterie (1) selon l'une des revendications précédentes, **caractérisé par** les étapes de procédé suivantes
- Positionner l'insert de compensation (5) dans la région du coin du cadre de support dans une position de compensation, dans lequel l'insert de compensation est placé contre une face latérale du profil longitudinal (2) ou contre une face latérale du profil transversal (3) et est poussé dans ou sur la face frontale de l'autre profil, en compensant un écart dimensionnel nominal existant entre les profils,
- Relier le profil longitudinal (2) et le profil transversal (3) à l'insert de compensation (5) tout en intégrant l'insert de compensation (5).

12. Procédé de fabrication d'un cadre de support de batterie (1) selon la revendication précédente, **caractérisé par** l'étape de procédé supplémentaire consistant à usiner la région inférieure de l'au moins un coin de cadre de support formé par l'insert de compensation (5), le profil longitudinal (2) et le profil transversal (3) après que le profil longitudinal (2) et le profil transversal (3) ont été assemblés.

13. Procédé de fabrication d'un cadre de support de batterie (1) selon l'une des deux revendications précédentes, **caractérisé en ce que** l'insert de compensation (5) est transféré dans la position de compensation en compensant un écart dimensionnel nominal existant par une force d'ajustement qui lui est appliquée.

14. Procédé de fabrication d'un cadre de support de batterie (1) selon la revendication précédente, **caractérisé en ce que,** avant l'insertion du profil de compensation (5) dans le profil transversal (3) ou le profil longitudinal (2), des nervures internes (8) ont été rognées à l'intérieur dudit profil transversal (3) ou dudit profil longitudinal (2).
